# EUROPEAN PATENT APPLICATION

(11) **EP 4 790 962 A1**
(43) Date of publication of application: **12.08.2026**
(21) Application number: 26157887.6
(22) Date of filing: 11.02.2026
(51) Int. Cl.: H04L 47/283

(54) **UTILIZING A TIME SERIES FORECASTING MODEL TO PRESERVE TIME-SENSITIVE NETWORKING TRAFFIC**

(30) Priority: 11.02.2025 US 202519050669
(71) Applicant: RAD Data Communications Ltd., 69719 Tel Aviv (IL)
(72) Inventor: KUTTNER, Yosef Yehuda, Tel Aviv (IL); EPSTEIN, Shabtai, Tel Aviv (IL); INSLER, Ron, Tel Aviv (IL)
(74) Representative: Lavoix

(57) **Abstract**

There is provided a system of facilitating zero queuing delay of privileged packet traffic transmitted on a given output datalink, the system comprising a processing circuitry configured to: receive, from a trained time series forecasting model, one or more predicted packet arrival times (PPATs), wherein training the time series forecasting model is based on a series of arrival times of packets to be transmitted on the given output datalink, the packets being associated with a privileged service class; based on a current time, estimate a transmission termination time of a first packet associated with a non-privileged service class; responsive to, at least, the estimated transmission termination time of the first packet preceding an estimated privileged packet transmission initiation time, the estimated privileged packet transmission initiation time being based on a next PPAT of the one or more PPATs: initiate transmission of the first packet, at the given output datalink.

## Description

### TECHNICAL FIELD

The presently disclosed subject matter relates to control of network transmission links, and in particular to methods of ensuring service quality of privileged service classes on such links.

### BACKGROUND

Problems of ensuring service quality over heterogeneous packet networks have been recognized in the conventional art and various techniques have been developed to provide solutions.

### SUMMARY

According to one aspect of the presently disclosed subject matter there is provided a system of facilitating zero queuing delay of privileged packet traffic transmitted on a given output datalink, the system comprising a processing circuitry (PC) configured to:
a) receive, from a trained time series forecasting model, data indicative of two or more predicted packet arrival times (PPATs),
   wherein training the time series forecasting model is based on a series of arrival times of packets to be transmitted on the given output datalink, the packets being associated with a privileged service class;
b) based on a current time, estimate a transmission termination time of a first packet associated with a non-privileged service class;
c) responsive to, at least:
   the estimated transmission termination time of the first packet preceding an estimated privileged packet transmission initiation time,
   the estimated privileged packet transmission initiation time being based on a next PPAT of the two or more PPATs,
initiate transmission of the first packet, at the given output datalink.

In addition to the above features, the system according to this aspect of the presently disclosed subject matter can comprise one or more of features (i) to (ix) listed below, in any desired combination or permutation which is technically possible:
(i) the estimated privileged packet transmission initiation time is further based on a given internal processing delay value
(ii) the initiating transmission is further responsive to a time offset between:
   i. a most-recent PPAT of the two or more PPATs, and
   ii. the current time,
      exceeding an associated privileged packet arrival delay tolerance
(iii) the time series forecasting model is a seq2seq encoder-decoder long short-term memory (LSTM) model
(iv) the time series forecasting model is a transformer model
(v) the PC is further configured to, subsequent to a):
   a. compare one or more of the PPATs to respective arrival times of a one or more packets to be transmitted on the given output datalink, the one or more packets being associated with the privileged service class;
   b. based on, at least, the comparing of the PPATs to the arrival times, determine whether the trained time series forecasting model meets a prediction accuracy criterion; and
   c. responsive to the trained time series forecasting model not meeting the prediction accuracy criterion, initiate a new training of the time series forecasting model
(vi) the time series forecasting model is trained based on a series of historical interpacket arrival time differences,
   the series of historical interpacket arrival time differences having been determined from a received series of arrival times of packets to be transmitted on the given output datalink
(vii) the initiating transmission comprises:
   signaling to a network adapter device.
(viii) The initiating transmission comprises:
   enqueuing the first packet to a fixed delay queue.
(ix) the series of arrival times is derivative of a series of packets received from a time-sensitive network (TSN)

According to another aspect of the presently disclosed subject matter there is provided a processor-based method of facilitating zero queuing delay of privileged packet traffic transmitted on a given output datalink, the method comprising:
a) receiving, from a trained time series forecasting model, data indicative of two or more predicted packet arrival times (PPATs),
   wherein training the time series forecasting model is based on a series of arrival times of packets to be transmitted on the given output datalink, the packets being associated with a privileged service class;
b) based on a current time, estimating a transmission termination time of a first packet associated with a non-privileged service class;
c) responsive to, at least, the estimated transmission termination time of the first packet preceding an estimated privileged packet transmission initiation time, the estimated privileged packet transmission initiation time being based on a next PPAT of the two or more PPATs,
initiating transmission of the first packet, at the given output datalink.

This aspect of the disclosed subject matter can further optionally comprise one or more of features (i) to (ix) listed above with respect to the system, mutatis mutandis, in any desired combination or permutation which is technically possible.

According to another aspect of the presently disclosed subject matter there is a computer program product comprising a computer readable non-transitory storage medium containing program instructions, which program instructions when read by a processor, cause the processing circuitry to perform a method of facilitating zero queuing delay of privileged packet traffic transmitted on a given output datalink, the method comprising:
a) receiving, from a trained time series forecasting model, data indicative of two or more predicted packet arrival times (PPATs),
   wherein training the time series forecasting model is based on a series of arrival times of packets to be transmitted on the given output datalink, the packets being associated with a privileged service class;
b) based on a current time, estimating a transmission termination time of a first packet associated with a non-privileged service class;
c) responsive to, at least, the estimated transmission termination time of the first packet preceding an estimated privileged packet transmission initiation time, the estimated privileged packet transmission initiation time being based on a next PPAT of the two or more PPATs,
initiating transmission of the first packet, at the given output datalink.

This aspect of the disclosed subject matter can further optionally comprise one or more of features (i) to (ix) listed above with respect to the system, mutatis mutandis, in any desired combination or permutation which is technically possible.

### BRIEF DESCRIPTION OF THE DRAWINGS

In order to understand the invention and to see how it can be carried out in practice, embodiments will be described, by way of non-limiting examples, with reference to the accompanying drawings, in which:
**Fig. 1** illustrates a logical block diagram of a deployment of a packet forwarding device configured for zero packet queuing of privileged traffic, in accordance with some embodiments of the presently disclosed subject matter;
**Fig. 2** illustrates a logical block diagram of an example transmission subsystem (processing circuitry) **200,** configured for maintaining zero queuing delay for privileged packet traffic, in accordance with some embodiments of the presently disclosed subject matter;
**Fig. 3A** is a flow diagram of an example method of training a time series forecasting model to generate predictions of privileged service class packet arrival times, in accordance with some embodiments of the presently disclosed subject matter;
**Fig**. **3B** is a flow diagram of an example method of ensuring validity and updating a time series forecasting model, in accordance with some embodiments of the presently disclosed subject matter;
**Fig. 4** illustrates an example timeline of predicted packet arrival times as generated by LSTM at a given time, t, in accordance with some embodiments of the presently disclosed subject matter;
**Fig. 5** is a flow diagram illustrating an example method of controlling transmission of a frame of a non-privileged service class - so as to facilitate zero queuing delay of frames of a privileged service class, according to some embodiments of the presently disclosed subject matter; and
**Fig. 6** is a flow diagram illustrating an example method of determining whether to block or permit initiation of transmission of a frame of a non-privileged service class, thereby facilitating zero queuing delay of frames of a privileged service class, according to some embodiments of the presently disclosed subject matter.

### DETAILED DESCRIPTION

In the following detailed description, numerous specific details are set forth in order to provide a thorough understanding of the invention. However, it will be understood by those skilled in the art that the presently disclosed subject matter may be practiced without these specific details. In other instances, well-known methods, procedures, components and circuits have not been described in detail so as not to obscure the presently disclosed subject matter.

Unless specifically stated otherwise, as apparent from the following discussions, it is appreciated that throughout the specification discussions utilizing terms such as "processing", "computing", "comparing", "encrypting", "decrypting", "determining", "calculating", "receiving", "providing", "obtaining", "emulating" or the like, refer to the action(s) and/or process(es) of a computer that manipulate and/or transform data into other data, said data represented as physical, such as electronic, quantities and/or said data representing the physical objects. The term "computer" should be expansively construed to cover any kind of hardware-based electronic device with data processing capabilities including, by way of non-limiting example, the processor, mitigation unit, and inspection unit therein disclosed in the present application.

The terms "non-transitory memory" and "non-transitory storage medium" used herein should be expansively construed to cover any volatile or non-volatile computer memory suitable to the presently disclosed subject matter.

The operations in accordance with the teachings herein may be performed by a computer specially constructed for the desired purposes or by a general-purpose computer specially configured for the desired purpose by a computer program stored in a non-transitory computer-readable storage medium.

Embodiments of the presently disclosed subject matter are not described with reference to any particular programming language. It will be appreciated that a variety of programming languages may be used to implement the teachings of the presently disclosed subject matter as described herein.

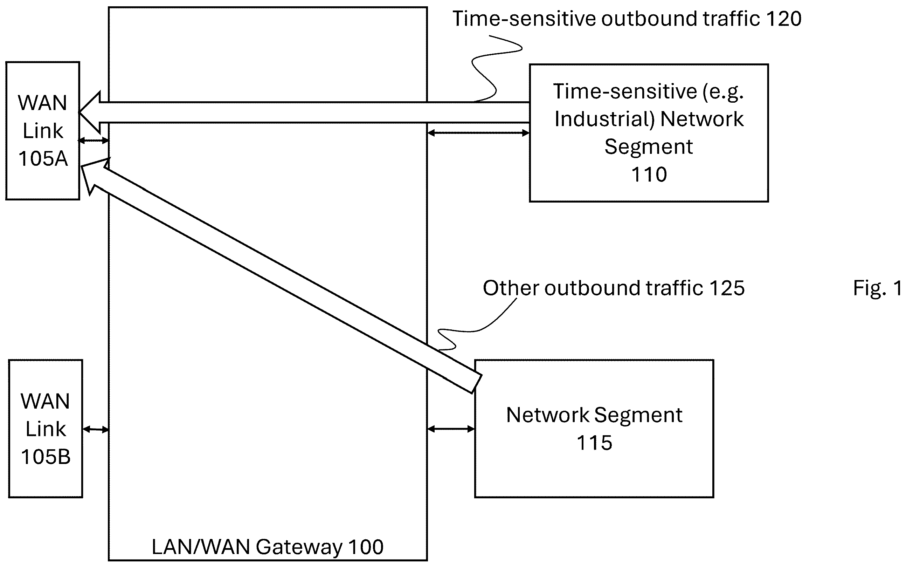

**Fig. 1** illustrates a logical block diagram of a deployment of a packet forwarding device configured for zero packet queuing of privileged traffic, in accordance with some embodiments of the presently disclosed subject matter.

Network segment **115** can be a local area network. Computers and other devices on network segment **115** can exchange packets with each other, and with remote destinations (e.g. accessed via wide-area network (WAN) or Operational technology (OT) Link **105A 105B)**

Time-sensitive (e.g. industrial) network segment **110** can be a local area network segment supporting time-sensitive network protocols. Industrial (time-sensitive) network segment **110** can e.g. utilize Institute of Electrical and Electronics Engineers (IEEE) 802 time-sensitive networking (TSN) standards to provide deterministic networking over link layers such as Ethernet. TSN can incorporating precise time synchronization and traffic scheduling mechanisms. Thus, frames transmitted on (and from) time-sensitive (e.g. industrial) network segment **110** can be latency- and jitter-controlled. Computers and other devices on time-sensitive (e.g. industrial) network segment **110** can exchange packets with each other, and with remote destinations (e.g. accessed via WAN/OT Link **105A** 105B)

LAN-WAN gateway **100** can be a forwarding device at the edge of a network e.g. between a local area network (LAN) and a WAN/OT. LAN-WAN/OT gateway **100** can be - for example - a router or switch.

WAN/OT link **105A 105B** can be a data link to a wide area network. For example: WAN link **105A 105B** can such as an optical Ethernet link operating at 1 Gbps or 10 Gbps connection.

When time-sensitive outbound traffic **120** (e.g. of a privileged service class) arrives from e.g. time-sensitive (e.g. industrial) network segment **110** or network segment **115** for forwarding on WAN Link **105A**, frame delay can occur despite scheduler behavior and priority queuing. High-priority frames may still be queued before transmission, because a lower-priority packet (of e.g. other outbound traffic **125**) is already being transmitted on the output link. Thus the deterministic timing of traffic from the time-sensitive network is not preserved, and jitter or missed deadlines can then result for packets of the privileged service class.

Some implementations of LAN-WAN gateway **100** can address this issue by utilizing an ethernet link supporting frame preemption (described for example in IEEE 802.3br) for WAN link **105a.** Link-layer frame preemption support allows lower-priority, frames to be interrupted mid-transmission to make way for high-priority frames.

In this case, after the LAN-WAN gateway **100** receives a frame of a privileged service class, and determines to transmit it at the output datalink, LAN-WAN gateway 100 then controls WAN link **105A** to immediately pause the transmission of the lower-priority frame, sends the high-priority frame, and then resumes the transmission of the lower-priority frame from where it was interrupted.

It is noted that support for frame preemption can require link-layer hardware-level support.

Some embodiments of the presently disclosed subject matter address this issue utilize a machine learning model to dictate time intervals when the scheduler is blocked from scheduling packets. In some such embodiments - to facilitate this scheme - the network adapter model performs no internal queuing of its own, thereby ensuring zero queueing for frames belonging to a privileged service class.

It is further noted that while **Fig. 1** illustrates a LAN/WAN gateway device, similar issues can arise in other settings such as automotive networks etc. and similar solutions can be utilized.

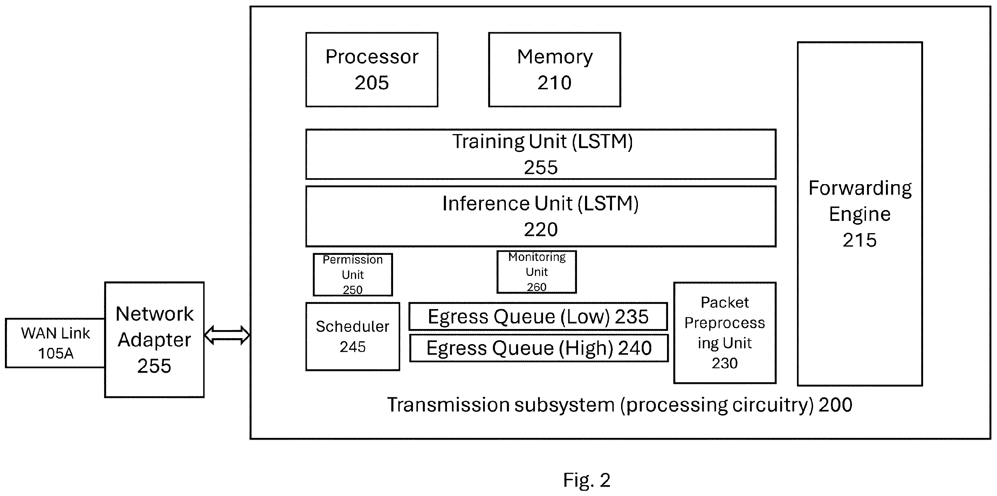

**Fig. 2** illustrates a logical block diagram of an example transmission subsystem (processing circuitry) **200**, configured for maintaining zero queuing delay for privileged packet traffic, in accordance with some embodiments of the presently disclosed subject matter.

For simplicity, **Fig. 2** illustrates components of LAN/WAN gateway **100** which are involved in frame transmission on WAN link **105A.** Other components of LAN/WAN gateway **100,** including data links etc., are omitted.

Transmission subsystem (processing circuitry) **200** can include a processor **205** and memory **210.**

Processor **205** can be a suitable hardware-based electronic device with data processing capabilities, such as, for example, a general-purpose processor, graphics processing unit (GPU), digital signal processor (DSP), a specialized Application-Specific Integrated Circuit (ASIC), one or more cores in a multicore processor, etc. Processor **205** can also consist, for example, of multiple processors, multiple ASICs, virtual processors, combinations thereof, etc.

Memory **210** can be, for example, a suitable kind of volatile and/or non-volatile storage, and can include, for example, a single physical memory component or a plurality of physical memory components. Memory **210** can also include virtual memory. Memory **210** can be configured to, for example, store various data used in computation.

Transmission subsystem (processing circuitry) **200** can be configured to execute several functional modules in accordance with computer-readable instructions implemented on a non-transitory computer-readable storage medium. Such functional modules are referred to hereinafter as comprised in the processing circuitry. These modules can include packet preprocessing unit (PPU) **230**, inference unit (long-short-term memory (LSTM)) **220**, forwarding engine (FE) **215**, permission unit (PU) **250**, scheduler **245**, training unit (LSTM) **255**, monitoring unit **260**, egress queue (low) **235**, and egress queue (high) **240**.

Forwarding engine **215** can perform routing, switching, or other packet processing on packets received from ingress interfaces and forward them to correct egress interface(s) (e.g., WAN link **105A**) for transmission on network adapter **255**.

Packet preprocessing unit **230** can receive packets (e.g., destined for WAN link **105A**) from forwarding engine **215.** Packet preprocessing unit **230** can determine a packet arrival time and a packet service class of each incoming packet. In some examples, packet preprocessing unit **230** can receive packet arrival time and a packet service class from forwarding engine **215** or another entity.

Packet preprocessing unit **230** can forward a series of arrival times of high-priority packets to training unit (LSTM) **255** , which trains inference unit (LSTM) **220.** When trained, the inference unit (LSTM) **220** can generate, e.g., on an ongoing basis, predicted arrival times of frames of the privileged service class. Monitoring unit **260** can monitor and ensure accuracy of inference unit (LSTM) **220.**

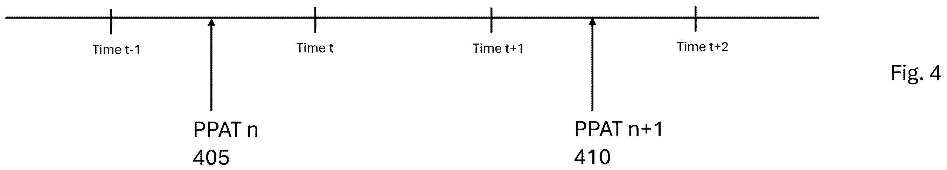

Permission unit **250** can receive the expected arrival time data from inference unit (LSTM) **220** and can - at specific times - control the scheduler to prevent transmission of any nonprivileged traffic, as described below with reference to **Fig. 4****.**

It is noted that another time series forecasting model (e.g. a transformer) can be utilized in inference unit **220** instead of an LSTM.

Transmission subsystem (processing circuitry) **200** can include egress queues and scheduling. For example, egress queue (low) **235** can be a low-priority egress queue for frames awaiting transmission on WAN link **105A.** Similarly, egress queue (high) **240** can be a queue dedicated to high-priority traffic. In some examples, additional queues or different queues are present. Scheduler **245** can perform scheduling (using any scheduling technique, and/or rate limiting, etc.) among egress queue (low) **235** and egress queue (high) **240**, as well as any other possible egress queues. By way of non-limiting example, scheduler **245** can transmit all packets from egress queue (high) **240** before transmitting packets from any other egress queue.

Network adapter **255** can be, for example, a 1 Gigabit-per-second or 10 Gigabit-per-second optical Ethernet link (e.g., carrier Ethernet). In some examples, network adapter **255** does not utilize internal queuing of frames for transmission (e.g., network adapter **255** can transmit frame data from memory **210,** responsive to an instruction by scheduler **245**).

It is noted that the teachings of the presently disclosed subject matter are not bound by the system described with reference to **Figs. 1-2****.** Equivalent and/or modified functionality can be consolidated or divided in another manner and can be implemented in any appropriate combination of software with firmware and/or hardware and executed on a suitable device. The system can be a standalone entity, or integrated, fully or partly, with other entities.

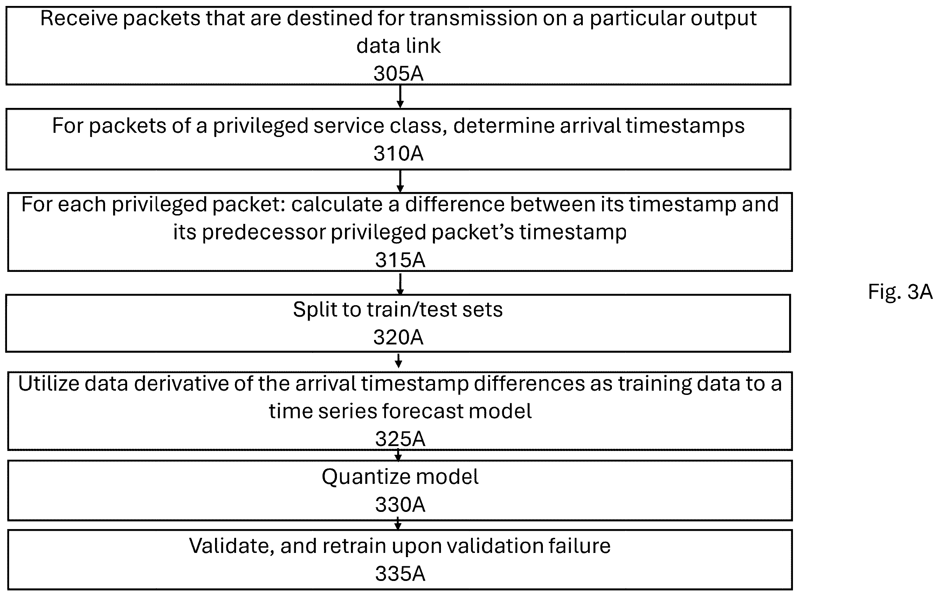

**Fig. 3A** is a flow diagram of an example method of training a time series forecasting model to generate predictions of privileged service class packet arrival times, in accordance with some embodiments of the presently disclosed subject matter.

It is noted that the training of the time series forecasting model can be performed on the system where packet forwarding is performed (e.g. transmission subsystem (processing circuitry) **200**). Alternatively, the training can be performed in a different system, and installed into the system where packet forwarding is performed (e.g. transmission subsystem (processing circuitry) **200**). For convenience only, the description hereinbelow pertains to an example where training is performed on the system where packet forwarding is performed.

Transmission subsystem (processing circuitry) **200** (for example: packet preprocessing unit **230**) can receive **305A** one or more packets that are destined for transmission on a particular WAN link **105A.** Transmission subsystem (processing circuitry) **200** (for example: packet preprocessing unit **230**) can receive a large number of packets (e.g. tens of thousands). Alternatively: transmission subsystem (processing circuitry) **200** (for example: packet preprocessing unit **230**) can receive a small number of packets, and e.g. perform the method of **Fig. 3A** multiple times (e.g. by performing quantization and validation only after a sufficiently large number of packets have been processed).

It is noted that transmission subsystem (processing circuitry) **200** (for example: packet preprocessing unit **230**) can support a variety of service classification and subclassification methods e.g. classification based on particular header fields and/or ingress port, metadata provided by a network adapter or by an operating system kernel etc. As used herein, a "privileged service class" refers to packets for which the system facilitates zero queueing delay as described herein. It is noted that the "privileged service class" thus may in fact include multiple services or multiple service classes as identified by header fields etc.

Transmission subsystem (processing circuitry) **200** (for example: packet preprocessing unit **230**) can next determine **310A** packet arrival timestamps of - at least - packets of the received packets which belong to the privileged service class.

Transmission subsystem (processing circuitry) **200** (for example: packet preprocessing unit **230**) can determine arrival timestamps e.g. from metadata provided by an ingress network adapter. Alternatively, transmission subsystem (processing circuitry) **200** can maintain a system clock (not shown), and determine a system clock time at the time of each packet reception. In some examples, transmission subsystem (processing circuitry) **200** (for example: packet preprocessing unit **230**) utilizes the same method for timestamping each frame, so as to ensure consistent training of the time series forecast model. In some other examples, transmission subsystem (processing circuitry) **200** can use heterogeneous methods of timestamping frames.

Transmission subsystem (processing circuitry) **200** (for example: packet preprocessing unit **230**) can calculate **315A** - for example - for each timestamp of a received packet of the privileged service class, a time difference between a given privileged packet timestamp and the timestamp of the previous packet of the privileged service class. Thus, the result can be a series of time differences between arriving packets of the privileged service class.

Having calculated the series of timestamp differences, transmission subsystem (processing circuitry) **200** (for example: training unit (LSTM) **250**) can split **320A** the timestamp differences data into a training set (e.g. 80% of the data) and a test set (e.g. 20% of the data).

Transmission subsystem (processing circuitry) **200** (for example: training unit (LSTM) **250**) can utilize **325A** data derivative of the arrival timestamp differences (e.g. the differences themselves) of the training set to train a time series forecast model (e.g. inference unit (LSTM) **220**). In some embodiments, the timestamp differences are given to the model as a count of a particular time quantum (e.g. 1 millisecond).

Transmission subsystem (processing circuitry) **200** (for example: training unit (LSTM) **250**) can quantize **330A** the model (e.g. inference unit (LSTM) **220**), and then can validate **330A** the model (e.g. inference unit (LSTM) **220**). Upon validation failure, transmission subsystem (processing circuitry) **200** (for example: training unit (LSTM) **250**) can retrain **330A** the model (e.g. inference unit (LSTM) **220**)

When the time series forecast model (e.g. inference unit (LSTM) **220**) has been trained, transmission subsystem (processing circuitry) **200,** (for example, permission unit **250**), can receive **320,** from the time series forecast model (e.g. inference unit (LSTM) **220**), data indicative of a series of predicted packet arrival timestamps (PPATs). PPATs can be received in various formats: e.g. absolute timestamps, time differentials in various units etc.

It is noted that the model (e.g. inference unit (LSTM) **220**) can generate data indicative of intervals of time in which privileged service class packets are predicted to arrive. In this case, the term PPAT refers to the earliest time in this interval, and the duration of interval is referred to as an associated privileged packet arrival delay tolerance.

In some examples, an associated privileged packet arrival delay tolerance (e.g. a system-provided value) is not provided by the model (e.g. inference unit (LSTM) **220**) but rather by some other entity. In some examples, all PPATs have the same associated privileged packet arrival delay tolerance (e.g. a system-provided value).

Transmission subsystem (processing circuitry) **200,** (for example, permission unit **250**) can utilize the received PPAT data to provide zero queueing delay for privileged service class traffic, as described below with reference to **Figs. 4-6****.**

It is noted that in some embodiments multiple time series forecast models can be utilized. In such embodiments the different time series forecast models can be trained on different training data (e.g. different subclasses within the privileged service class). In such embodiments, each model can then generate PPAT data for utilization (e.g. by permission unit **250**).

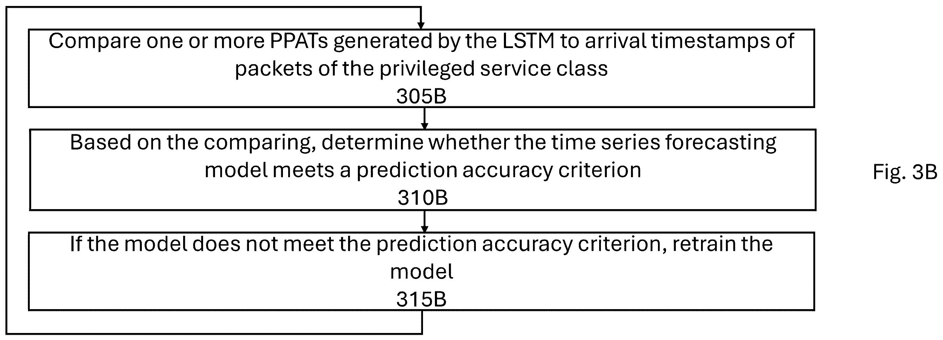

**Fig. 3B** is a flow diagram of an example method of ensuring validity and updating a time series forecasting model, in accordance with some embodiments of the presently disclosed subject matter.

As part of ongoing monitoring of the performance of the time series forecast model, transmission subsystem (processing circuitry) **200** (for example: prediction monitoring unit **255**) can compare **305B** one or more PPATs generated by the inference unit (LSTM) to arrival timestamps of corresponding packets of the privileged service class.

By way of non-limiting example: transmission subsystem (processing circuitry) **200** (for example: prediction monitoring unit **255**) can assess:
- whether each PPAT coincides with an actual received packet. More specifically: transmission subsystem (processing circuitry) **200** (for example: prediction monitoring unit **255**) can assess whether a given PPAT differs from an actual packet arrival time by less than a given tolerated deviation.
- whether there are arrivals of packets of the privileged service class - destined to the given output port - for which there is no corresponding PPAT.

Transmission subsystem (processing circuitry) **200** (for example: prediction monitoring unit **255**) can - based on the comparing - determine **310B** whether the time series forecasting model meets a prediction accuracy criterion.

By way of non-limiting example, transmission subsystem (processing circuitry) **200** (for example: prediction monitoring unit **255**) can calculate an accuracy score based on the comparisons of PPATs and arrival times that it performed. In this case, the prediction accuracy criterion can be whether the accuracy score meets a given threshold.

If the model does not meet the prediction accuracy criterion, transmission subsystem (processing circuitry) **200** (for example: prediction monitoring unit **255**) can retrain **315B** the model.

**Fig. 4** illustrates an example timeline of predicted packet arrival times as generated by inference unit (LSTM) at a given time, t, in accordance with some embodiments of the presently disclosed subject matter.

Time markings t-1, t, and t+1 can represent time units, e.g., microseconds. As shown in **Fig. 4**, at time t PPAT-N **405** represents the most recent predicted packet arrival time (i.e., it is the PPAT that precedes time t). To facilitate zero delay of privileged service class frames, transmission subsystem (processing circuitry) **200** (for example, permission unit **250**) can ensure that transmission of frames belonging to the non-privileged service class is not initiated at the time of PPAT-N **405**, and also during a subsequent time period referred to as a privileged packet arrival delay tolerance.

PPAT N+1 **410** represents the next predicted packet arrival time. Transmission subsystem (processing circuitry) **200** (for example, permission unit **250**) can ensure that any transmission of a non-privileged frame completes before the time indicated by PPAT N+1 **410.** It is noted that in some examples, transmission subsystem (processing circuitry) **200** (for example, permission unit **250**) can ensure that any transmission of a non-privileged frame completes before an estimated transmission initiation time of a future packet that arrives the time indicated by PPAT N+1 **410.**

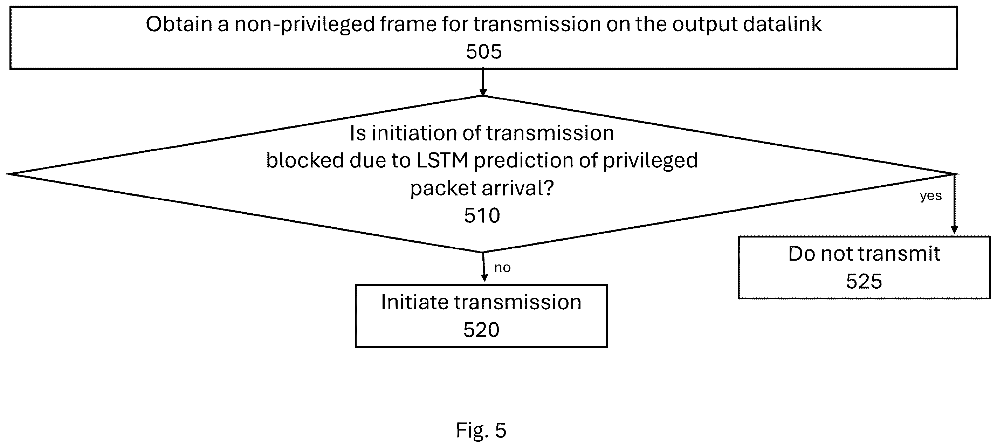

**Fig. 5** is a flow diagram illustrating an example method of controlling transmission of a frame of a non-privileged service class - so as to facilitate zero queuing delay of frames of a privileged service class, according to some embodiments of the presently disclosed subject matter.

Transmission subsystem (processing circuitry) **200** (for example, scheduler **245**) can obtain **505** a non-privileged frame for a transmission on the output data link. Transmission subsystem (processing circuitry) **200** (for example, scheduler **245**) can do this as part of its scheduling method (e.g., priority queuing, weighted-round-robin, combination of both, etc.). For example: transmission subsystem (processing circuitry) **200** (for example, scheduler **245**) can, responsive to a link idle state or pending transmission completion on WAN link **105A**, begin to prepare a next frame transmission. Transmission subsystem (processing circuitry) **200** (for example, scheduler **245**) can then-for example-based on its scheduling method, dequeue (or prepare to dequeue) a frame from egress queue (low) **235.** This frame is here forward termed the "candidate frame."

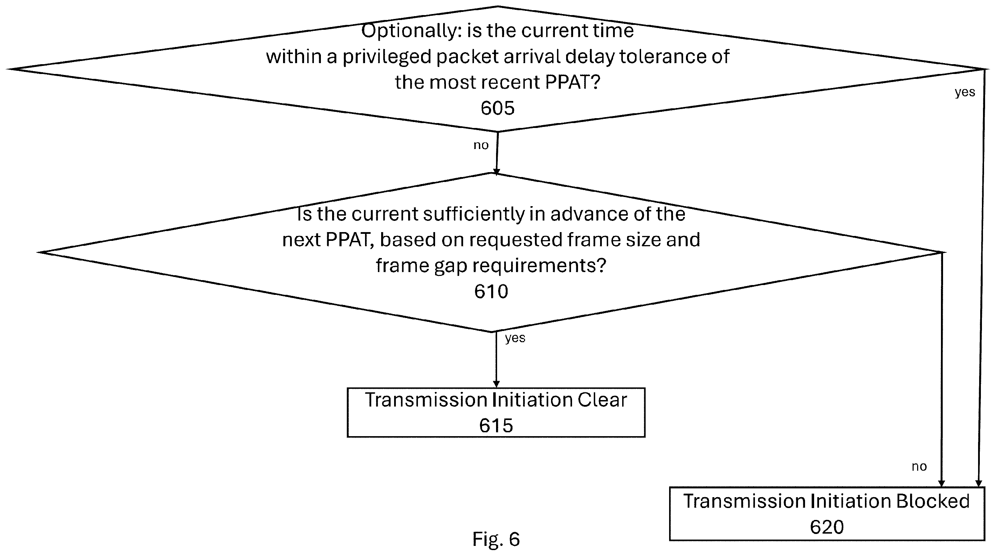

Transmission subsystem (processing circuitry) **200** (for example, scheduler **245**) can next evalute whether **510** initiation of transmission of a non-privileged frame (e.g., of the bit length of the candidate frame) is blocked due to an LSTM-generated prediction of a privileged packet arrival. The transmission subsystem (processing circuitry) **200** (for example: scheduler **245**) can determine this using a method such as the one described below, with reference to **Fig. 6****.**

If initiation is blocked, transmission subsystem (processing circuitry) **200** (for example, scheduler **245**) does not transmit **525.** Instead, transmission subsystem (processing circuitry) **200** (for example, scheduler **245**) can retry the method of **Fig. 6** at a later time, based on, e.g., the scheduling method. It is noted that the method of determining whether to block transmission can optionally supply data indicative of a retry time. Transmission subsystem (processing circuitry) **200** (for example, scheduler **245**) can-in the context of its scheduler method and/or other considerations-retry the method of **Fig. 6** based on the supplied retry time and/or other factors.

If initiation is not blocked, transmission subsystem (processing circuitry) **200** (for example, scheduler **245**) can initiate **520** transmission of the candidate frame.

**Fig. 6** is a flow diagram illustrating an example method of determining whether to block or permit initiation of transmission of a frame of a non-privileged service class, thereby facilitating zero queuing delay of frames of a privileged service class, according to some embodiments of the presently disclosed subject matter.

As described above with reference to **Fig. 4****,** to facilitate zero queuing delay of frames of a privileged service class, transmission subsystem (processing circuitry) **200** (for example, scheduler **245**) can ensure that the transmission link is available to transmit a privileged packet that arrives at a time when inference unit (LSTM) **220** has estimated a privileged packet arrival.

Consequently: transmission subsystem (processing circuitry) **200** (for example, scheduler **245**) can refrain from initiation of transmission of a non-privileged packet if the transmission (i.e. during any of its duration of being transmitted over the link) could prevent subsequent immediate transmission of a privileged service class packet that is predicted to arrive. As well, transmission subsystem (processing circuitry) **200** (for example, scheduler **245**) can (optionally) also refrain from initiation of the transmission during a fixed or varying period following a predicted arrival time during which the predicted privileged packet may still arrive (i.e. the "privileged packet arrival delay tolerance").

In some embodiments, this privileged packet arrival delay tolerance is fixed, and can be based, e.g., on factors such as given information regarding jitter requirements on an input link (e.g., time-sensitive (e.g., industrial network segment **110**)). In some embodiments, the privileged packet arrival delay tolerance is variable, and can be based on, e.g., maximum observed deviation of privileged packet arrival from PPATs generated by inference unit (LSTM) **220** over, e.g., a certain time period or certain number of frames.

Thus: transmission subsystem (processing circuitry) **200** (for example, permission unit **250**) can optionally determine **605** whether the current time (e.g. as determined from a system clock, or global positioning system etc.) follows the most recent PPAT within the privileged packet arrival delay tolerance. If so, then transmission initiation is blocked **620.**

If transmission initiation is not blocked, transmission subsystem (processing circuitry) **200** (for example, permission unit **250**) can proceed to determine (based on e.g. current time, candidate frame size, link speed, and frame gap requirements) **610** whether the frame transmission will complete without causing delay to a privileged service class packet that might arrive at the next PPAT.

Transmission subsystem (processing circuitry) **200** (for example, permission unit **250**) can utilize the link rate and candidate frame length to determine a link transmission duration time (e.g., in nanoseconds), as known in the art. Any frame gap requirements can similarly indicate a time period (e.g., in nanoseconds) where non-privileged frame transmission initiation can (in some embodiments) be blocked, and thus this gap time can be included in the transmission duration time.

The time (e.g. the earliest time) at which a packet arriving at the next PPAT would begin transmission on the output link is herein termed a "estimated privileged packet transmission initiation time".

In some examples, there may be a known (or known minimum) internal processing latency between packet reception (on an ingress link) and initiate of transmission (on the output link). In such cases, the estimated privileged packet transmission initiation time can be the next PPAT plus this internal processing latency delay value.

In some other examples, the internal processing latency delay value can include a time value representing a tolerated delay of privileged packets (e.g. some examples might tolerate 10 bit times of queueing delay of privileged packets).

In some other examples, the internal processing latency can be comparatively small, unknown, or not considered for other reasons. In such cases, the estimated privileged packet transmission initiation time can be equivalent to the next PPAT.

If the frame transmission will complete before the estimated privileged packet transmission initiation time, the transmission initiation is clear **615** (and otherwise it is blocked **620**).

It is noted that the teachings of the presently disclosed subject matter are not bound by the flow diagrams illustrated in **Figs. 3A-3B**, and **5-6**. The illustrated operations can occur substantially concurrently, or out of the illustrated order. It is also noted that whilst the flow chart is described with reference to elements of the system **Figs. 1-2****,** this is by no means binding, and the operations can be performed by elements other than those described herein.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

It will also be understood that the system according to the invention may be, at least partly, implemented on a suitably programmed computer. Likewise, the invention contemplates a computer program being readable by a computer for executing the method of the invention. The invention further contemplates a non-transitory computer-readable memory tangibly embodying a program of instructions executable by the computer for executing the method of the invention.

Those skilled in the art will readily appreciate that various modifications and changes can be applied to the embodiments of the invention as hereinbefore described without departing from its scope, defined in and by the appended claims.

## Claims

1. A system of facilitating zero queuing delay of privileged packet traffic transmitted on a given output datalink, the system comprising a processing circuitry (PC) configured to:
a) receive, from a trained time series forecasting model, data indicative of one or more predicted packet arrival times (PPATs),
wherein training the time series forecasting model is based on a series of arrival times of packets to be transmitted on the given output datalink, the packets being associated with a privileged service class;
b) based on a current time, estimate a transmission termination time of a first packet associated with a non-privileged service class;
c) responsive to, at least, the estimated transmission termination time of the first packet preceding an estimated privileged packet transmission initiation time, the estimated privileged packet transmission initiation time being based on a next PPAT of the one or more PPATs:
initiate transmission of the first packet, at the given output datalink.

2. The system of claim 1 wherein the estimated privileged packet transmission initiation time is further based on a given internal processing delay value.

3. The system of any one of claims 1-2 wherein the initiating transmission is further responsive to:
a time offset between:
i. a most-recent PPAT of the one or more PPATs, and
ii. the current time,
exceeding an associated privileged packet arrival delay tolerance.

4. The system of any one of claims 1-3 wherein the time series forecasting model is a seq2seq encoder-decoder long short-term memory (LSTM) model.

5. The system of any one of claims 1-3 wherein the time series forecasting model is a transformer model.

6. The system of any one of claims 1-5 wherein the PC is further configured to, subsequent to a):
a. compare one or more of the PPATs to respective arrival times of a one or more packets to be transmitted on the given output datalink, the one or more packets being associated with the privileged service class;
b. based on, at least, the comparing of the PPATs to the arrival times, determine whether the trained time series forecasting model meets a prediction accuracy criterion; and
c. responsive to the trained time series forecasting model not meeting the prediction accuracy criterion, initiate a new training of the time series forecasting model.

7. The system of any one of claims 1-6, wherein the time series forecasting model is trained based on a series of historical interpacket arrival time differences,
the series of historical interpacket arrival time differences having been determined from a received series of arrival times of packets of the privileged service class to be transmitted on the given output datalink.

8. The system of any one of claims 1-7, wherein the initiating transmission comprises:
signaling to a network adapter device.

9. The system of any one of claims 1-8, wherein the series of arrival times is derivative of a series of packets received from a time-sensitive network (TSN).

10. A processor-based method of facilitating zero queuing delay of privileged packet traffic transmitted on a given output datalink, the method comprising:
a) receiving, from a trained time series forecasting model, data indicative of two or more predicted packet arrival times (PPATs),
wherein training the time series forecasting model is based on a series of arrival times of packets to be transmitted on the given output datalink, the packets being associated with a privileged service class;
b) based on a current time, estimating a transmission termination time of a first packet associated with a non-privileged service class;
c) responsive to, at least the estimated transmission termination time of the first packet preceding an estimated privileged packet transmission initiation time, the estimated privileged packet transmission initiation time being based on a next PPAT of the two or more PPATs,
initiating transmission of the first packet, at the given output datalink.

11. A computer program product comprising a computer readable non-transitory storage medium containing program instructions, which program instructions when read by a processor, cause the processing circuitry to perform a method of facilitating zero queuing delay of privileged packet traffic transmitted on a given output datalink, the method comprising:
a) receiving, from a trained time series forecasting model, data indicative of two or more predicted packet arrival times (PPATs),
wherein training the time series forecasting model is based on a series of arrival times of packets to be transmitted on the given output datalink, the packets being associated with a privileged service class;
b) based on a current time, estimating a transmission termination time of a first packet associated with a non-privileged service class;
c) responsive to, at least, the estimated transmission termination time of the first packet preceding an estimated privileged packet transmission initiation time, the estimated privileged packet transmission initiation time being based on a next PPAT of the two or more PPATs:
initiating transmission of the first packet, at the given output datalink.
